# EUROPÄISCHE PATENTSCHRIFT

(11) **EP 3 453 866 B1**
(45) Veröffentlichungstag und Bekanntmachung des Hinweises auf die Patenterteilung: **23.06.2021**
(21) Anmeldenummer: 18193389.6
(22) Anmeldetag: 10.09.2018
(51) Int. Cl.: F02M 61/14, B25B 27/00, B23P 19/08, F02M 61/16, F16J 15/3268

(54) **MONTAGESYSTEM ZUM AUFBRINGEN EINES DICHTRINGES**
MOUNTING SYSTEM FOR APPLYING A SEALING RING
SYSTÈME DE MONTAGE POUR L'APPLICATION D'UN JOINT D'ÉTANCHÉITÉ

(30) Priorität: 12.09.2017 DE 102017216040
(43) Veröffentlichungstag der Anmeldung: 13.03.2019
(73) Patentinhaber: Robert Bosch GmbH, 70442 Stuttgart (DE)
(72) Erfinder: Kirschner, Josef, 85072 Eichstaett (DE); Huemmer, Steffen, 37434 Gieboldehausen (DE); Benzinger, Helmut, 85132 Schernfeld (DE)

(56) Entgegenhaltungen:
- DE-A1- 10 022 383
- FR-A- 1 517 492
- US-A1- 2003 097 744
- US-A1- 2004 194 277
- US-A1- 2005 109 325

## Beschreibung

Die Erfindung betrifft ein Montagesystem zum Aufbringen eines Dichtringes auf einen Kraftstoffinjektor.

### Stand der Technik

Kraftstoffinjektoren (Hochdruck-Einspritzventile) weisen häufig einen Dichtring auf, um die Schnittstelle zwischen dem Injektor und dem Gehäuse eines Verbrennungsraums, in den der Kraftstoffinjektor eingebracht worden ist, gasdicht abzudichten.

Der Dichtring ist ein Verschleißteil, das jedes Mal ausgetauscht werden muss, wenn der Injektor bewegt wird, insbesondere wenn der Injektor aus seiner Position im Brennraum gezogen wird. Montagesystems zum Aufbringen eines Dichtringes sind bekannt aus US 2003/097744 A1, US 2005/109325 A1, DE 100 22 383 A1 und US 2004/194277.

### Offenbarung der Erfindung:

Es ist eine Aufgabe der Erfindung, das Austauschen des Dichtringes, insbesondere das Aufbringen eines neuen Dichtringes auf den Injektor, zu vereinfachen.

Ausführungsbeispiele der Erfindung umfassen auch ein Montagesystem zum Aufbringen eines Dichtringes auf einen Injektor gemäß Anspruch 1.

Ein Verfahren zum Aufbringen eines Dichtringes auf einen Injektor mit einem solchen Montagesystem umfasst, einen Dichtring auf den ersten Bereich des Montageelements aufzubringen; das Montageelement auf den Injektor aufzubringen; die Aufschiebevorrichtung derart auf das Montageelement aufzuschieben, dass das Montageelement in die Bohrung eindringt und die Aufschiebevorrichtung den Dichtring über den kegelförmigen Bereich und den zweiten zylindrischen Bereich des Montageelements auf einen Bereich des Injektors schiebt; und die Aufschiebevorrichtung von dem Montageelement abzuziehen.

Durch den Anschlag wird die Eindringtiefe des Montageelements in die Bohrung auf ein vorgegebenes Maß, das nicht überschritten werden kann, begrenzt. Ein zu montierender Dichtring wird so auf seine endgültige Position auf dem Injektor geschoben, wenn die Aufschiebevorrichtung bis zum Anschlag auf das Montageelement aufgeschoben wird. Die Montage und insbesondere die exakte Positionierung des Dichtringes werden dadurch erheblich vereinfacht.

Die durch den Anschlag vorgegebene Eindringtiefe ist exakt auf das Montageelement abgestimmt.

In einer Ausführungsform ist die Eindringtiefe durch den Anschlag auf 2,5 cm bis 3 cm, insbesondere auf 2,79 cm begrenzt. Eindringtiefen von 2,5 cm bis 3 cm entsprechen den üblichen Montagepositionen von Dichtringen auf Injektoren.

In einer Ausführungsform ist das Gehäuse der Aufschiebevorrichtung aus Kunststoff gefertigt. Ein Kunststoffgehäuse hat ein geringes Gewicht und kann, z.B. in einem Spritzgussverfahren, kostengünstig hergestellt werden.

Erfindungsgemäß ist das äußere Ende der Bohrung von elastischen Spreizelementen, insbesondere von drei elastischen Spreizelementen, umgeben. Die Spreizelemente können sich aufspreizen und so den Durchmesser der Bohrung verändern, um die Bohrung an unterschiedliche Durchmesser des Montageelements anzupassen. So wird sichergestellt, dass die axiale Auflagefläche des Dichtringes an den Spreizelementen immer maximal ist.

In einer Ausführungsform ist am inneren Ende der Bohrung ein Ausdrückstift vorhanden, der ausgebildet ist, ein in der Bohrung angeordnetes Montageelement in Richtung des offenen Endes der Bohrung zu drücken. Auf diese Weise wird verhindert, dass das Montageelement unerwünscht in der Bohrung verbleibt, und die Aufschiebevorrichtung kann gut von dem Montageelement getrennt werden.

In einer Ausführungsform ist der Ausdrückstift, insbesondere durch eine (Spiral-) Feder, elastisch gelagert. Auf diese Weise kann der Ausdrückstift gegen die Kraft der Feder verschoben werden, wenn die Aufschiebevorrichtung auf das Montageelement aufgebracht wird. Durch die elastische Kraft der Feder wird das Montageelement aus der Bohrung geschoben, wenn die Aufschiebevorrichtung vom Injektor abgezogen wird.

Erfindungsgemäß hat das Montageelement einen ersten zylindrischen Bereich, der einen ersten Durchmesser hat, einen zweiten zylindrischen Bereich, der einen zweiten Durchmesser hat, der größer als der erste Durchmesser ist, und einen kegelförmigen Bereich, der zwischen dem ersten und dem zweiten zylindrischen Bereich angeordnet ist und der die beiden zylindrischen Bereiche miteinander verbindet. Der erste und der zweite zylindrische Bereich und der kegelförmige Bereich sind insbesondere koaxial auf einer gemeinsamen Achse angeordnet. Durch Verschieben des Dichtringes von dem ersten zylindrischen Bereich über den kegelförmigen Bereich auf den zweiten zylindrischen Bereich wird der Dichtring auf den benötigten größeren Durchmesser aufgeweitet.

Der erste Durchmesser ist so gewählt, dass der Dichtring gut auf das Montageelement aufgeschoben werden kann. Der erste Durchmesser entspricht also in etwa dem Innendurchmesser des Dichtringes in seinem nicht aufgeweiteten Ausgangszustand.

Der zweite Durchmesser ist so gewählt, dass nur eine sehr geringe Wandstärke des zweiten zylindrischen Bereichs des Montageelements zum Außendurchmesser des Injektors hinzukommt. Eine so starke Aufweitung des Dichtringes wird auf diese Weise verhindert.

Ein Ausführungsbeispiel der Erfindung wird im Folgenden unter Bezugnahme auf die beigefügten Figuren beschrieben.

### Kurze Beschreibung der Figuren

Die Figur 1 zeigt ein Montageelement zum Aufschieben eines Dichtringes auf einen Injektor.
Die Figur 2 zeigt das Montageelement aus Figur 1 mit einem auf das Montageelement aufgeschobenen Dichtring.
Die Figur 3 zeigt das Montageelement aus Figur 2 mit einem auf das Montageelement aufgeschobenen Dichtring, wobei das Montageelement auf den einspritzseitigen Bereich eines Injektors aufgebracht ist.
Die Figur 4 zeigt die Konfiguration aus Figur 3 mit einer Aufschiebevorrichtung gemäß einem Ausführungsbeispiel der Erfindung.
Die Figur 5 zeigt die Konfiguration aus Figur 4, wobei die Aufschiebevorrichtung und das Montageelement von dem Injektor entfernt worden sind.
Figur 6 zeigt den endgültigen Zustand des Injektors mit einem auf dem einspritzseitigen Bereich des Injektors aufgebrachten Dichtring.
Figur 7 zeigt eine perspektivische Außenansicht einer Aufschiebevorrichtung gemäß einem Ausführungsbeispiel der Erfindung.
Figur 8 zeigt eine perspektivische Schnittansicht der Aufschiebevorrichtung.
Figur 9 zeigt eine planare Schnittansicht der Aufschiebevorrichtung.

### Figurenbeschreibung

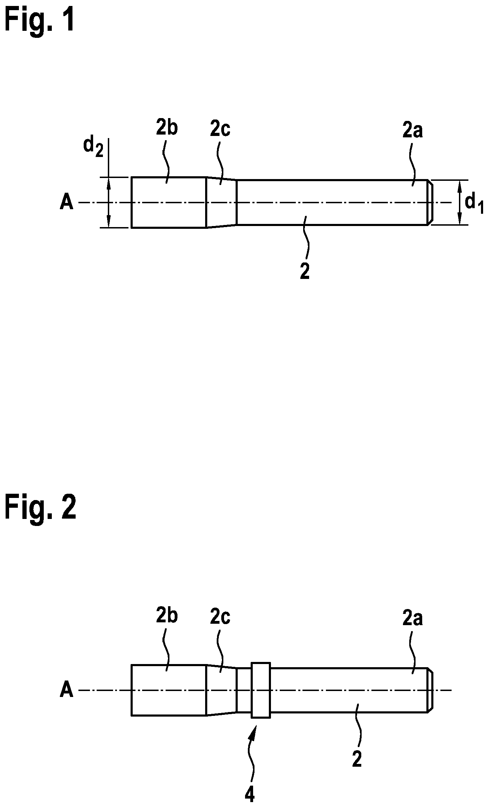

Die Figuren 1 bis 6 veranschaulichen die Verwendung einer erfindungsgemäßen Aufschiebevorrichtung 10 zum Aufbringen eines Dichtringes 4 auf einen Injektor 6.

Die Figur 1 zeigt ein Montageelement 2 mit einem ersten, rechts dargestellten, zylindrischen Bereich 2a, einem zweiten, links dargestellten, hohlen zylindrischen Bereich 2b. Der erste zylindrische Bereich 2a und der zweite zylindrische Bereich 2b sind koaxial auf einer gemeinsamen Achse A angeordnet.

Der zweite zylindrische Bereich 2b hat einen größeren Durchmesser d2 als der erste zylindrische Bereich 2a. Der erste und der zweite zylindrische Bereich 2a, 2c sind durch einen hohlen kegelförmigen Bereich 2b, der sich von dem Durchmesser d1 des ersten zylindrischen Bereichs 2a auf den Durchmesser d2 des zweiten zylindrischen Bereichs 2c aufweitet, miteinander verbunden.

Die Figur 2 zeigt das in der Figur 1 gezeigte Montageelement 2 mit einem auf das Montageelement 2 aufgebrachten Dichtring 4, der bis zum Übergang von dem ersten zylindrischen Bereich 2a auf den kegelförmigen Bereich 2b auf das Montageelement 2 aufgeschoben ist.

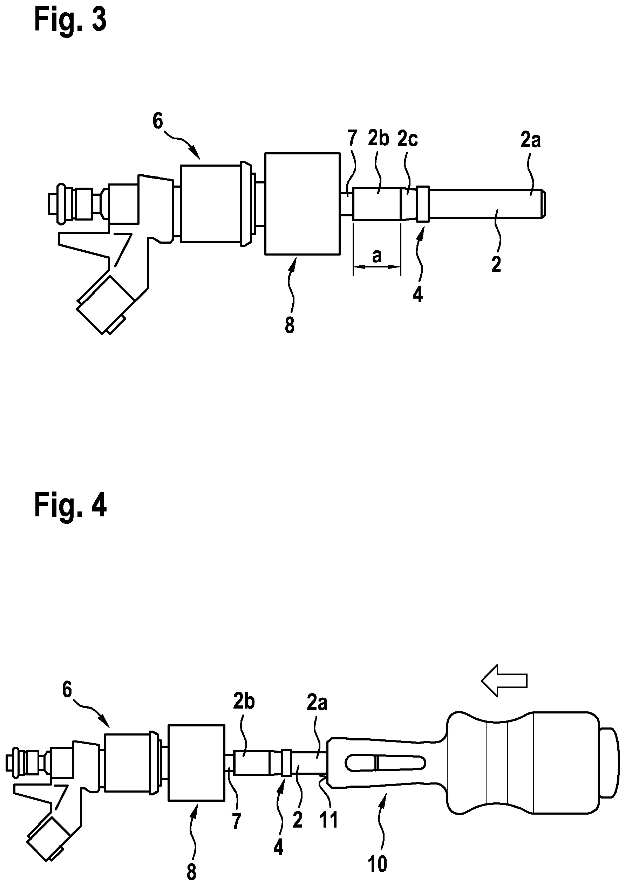

Figur 3 zeigt einen Injektor 6 mit einem zylinderförmigen einspritzseitigen Bereich 7, auf den ein Kalibrierring 8 und ein Montageelement 2 mit dem Dichtring 4, wie es in der Figur 2 gezeigt ist, aufgeschoben sind. Dabei bezeichnet a die Länge des Überlapps zwischen dem Montageelement 2 und dem zylinderförmigen einspritzseitigen Bereich 7 des Injektors 6.

Die Figur 4 veranschaulicht, wie der Dichtring 4 durch Aufbringen einer erfindungsgemäßen Aufschiebevorrichtung 10 über den kegelförmigen Bereich 2b und den zweiten zylindrischen Bereich 2c des Montageelements 2 auf den zylinderförmigen einspritzseitigen Bereich 7 des Injektors 6 aufgeschoben wird. Dabei tritt eine dem Injektor 6 zugewandte Stirnseite 11 der Aufbringvorrichtung 10 in Kontakt mit dem Dichtring 4 und schiebt den Dichtring 4 über den kegelförmigen Bereich 2b und den zweiten zylindrischen Bereich 2c der Montagevorrichtung 2 auf den zylinderförmigen einspritzseitigen Bereich 7 des Injektors 6.

Nachdem der Dichtring 4 auf den einspritzseitigen Bereich 7 des Injektors 6 aufgeschoben worden ist, wird die Aufschiebevorrichtung 10 entfernt, indem sie vom einspritzseitigen Bereich des Injektors 6 (in der Darstellung der Figuren 3 bis 5 nach rechts) abgezogen werden wird. Das Montageelement 2 wird durch einen im Folgenden beschriebenen Federmechanismus aus der Aufschiebevorrichtung 10 gedrückt, so dass es zunächst auf dem einspritzseitigen Bereich des Injektors 6 verbleibt und separat abgezogen wird.

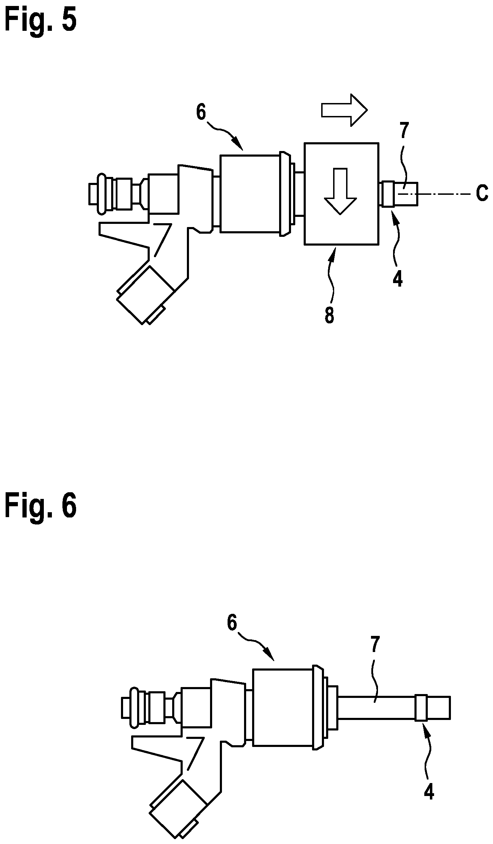

Danach wird der Kalibrierring 8 unter einer Drehbewegung von ca. 180° um eine Längsachse C des einspritzseitigen Bereichs 7 des Injektors 6 vom Injektor 6 abgezogen. Dadurch wird der Dichtring 4 kalibriert und an der richtigen Stelle des einspritzseitigen Bereichs 7 des Injektors 6 fixiert, so dass sich die in der Figur 6 gezeigte endgültige Konfiguration des Injektors 6 mit einem auf dem einspritzseitigen Bereich 7 montierten Dichtring 4 ergibt.

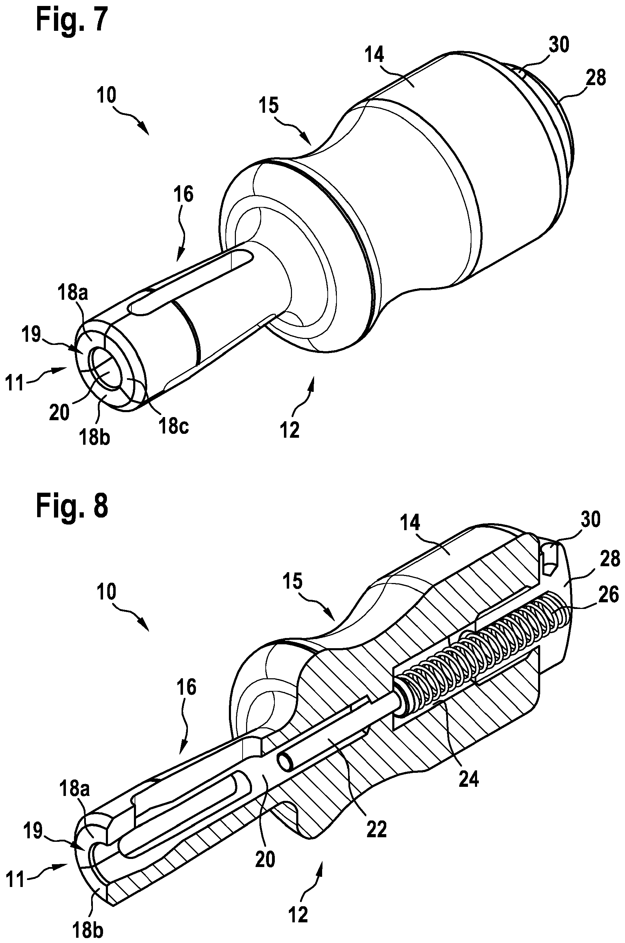

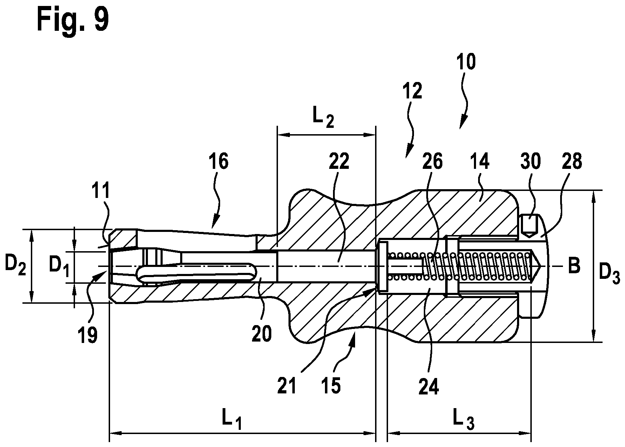

Figur 7 zeigt eine perspektivische Außenansicht einer Aufschiebevorrichtung 10 gemäß einem Ausführungsbeispiel der Erfindung. Figur 8 zeigt eine perspektivische Schnittansicht der Aufschiebevorrichtung 10 und Figur 9 zeigt eine planare Schnittansicht der in der in den Figuren 7 und 8 gezeigten Aufschiebevorrichtung 10.

Die Aufschiebevorrichtung 10 hat ein im Wesentlichen rotationssymmetrisches Gehäuse 12 mit einem hinteren (rechts dargestellten) Griffbereich 14, 15 und einem vorderen (links dargestellten) Schiebebereich 16. Der Griffbereich 14, 15 hat einen größeren Durchmesser D3 als der Schiebebereich 16 und ist mit einer ergonomischen Griffmulde 15 ausgebildet.

Das Gehäuse 12 hat beispielsweise einen maximalen Durchmesser D3 von ca. 25 mm.

Der Schiebebereich 16 umfasst drei Spreizelemente 18a, 18b und 18c, die um eine zentrale Bohrung 20, die sich entlang der Längsachse B der Aufschiebevorrichtung 10 erstreckt, derart angeordnet sind, dass sie in dem in der Figur 7 gezeigten entspannten Zustand aneinander anliegen und die Bohrung 20 zylinderförmig umschließen.

Der Außendurchmesser D2 des Schiebebereichs 16 beträgt in etwa 12 mm. Der Durchmesser D1 der zentralen Bohrung 20 ist abhängig vom Außendurchmesser d2 des Montageelements 2 und des einspritzseitigen Bereichs 7 des Injektors 6 und beträgt üblicherweise zwischen 5 und 7 mm, z.B. 5,35 mm oder 6,35 mm.

Die zentrale Bohrung 20 hat ein offenes vorderes Ende (Mündung) 19 und wird an ihrem hinteren Ende innerhalb des Gehäuses 12 durch einen Anschlag 21 begrenzt. Das Montageelement 2 schlägt an dem Anschlag 21 an, wenn die Aufschiebevorrichtung 10 auf das Montageelement 2 aufgeschoben wird, wie es in der Figur 4 gezeigt ist.

Der Abstand L1 zwischen dem offenen äußeren Ende 19 der Bohrung 20 und dem Anschlag 21 gibt somit die Länge der Strecke vor, die die Aufschiebevorrichtung 10 auf das Montageelement 2 aufgeschoben werden kann, bis das Montageelement 2 an dem Anschlag 21 anschlägt. Sie gibt damit auch die Position auf dem einspritzseitigen zylinderförmigen Bereich 7 des Injektors 6 vor, an der sich der Dichtring 4 befindet, nachdem die Aufschiebevorrichtung 10 bis zum Anschlag 21 auf das Montageelement 2 aufgeschoben worden ist.

Wenn das äußere Ende 19 der Bohrung 20 beim Aufschieben der Aufschiebevorrichtung 10 auf das Montageelement 2 den kegelförmigen Bereich 2b erreicht, werden die Spreizelemente 18a, 18b, 18c aufgespreizt. Durch das Aufspreizen vergrößert sich der Durchmesser der zentralen Bohrung 20, und der Schiebebereich 16 der Aufschiebevorrichtung 10 kann über den kegelförmigen Bereich 2b auf den zweiten zylindrischen Bereich 2c des Montageelements 2 aufgeschoben werden, der einen größeren Durchmesser D2 als der erste zylindrische Bereich 2a hat.

Das Gehäuse 12 der Aufschiebevorrichtung 10 ist aus einem elastischen Material, insbesondere aus einem Kunststoff, gefertigt, welches das beschriebene elastische Aufspreizen der Spreizelemente 18a, 18b, 18c ermöglicht.

Auf der von der zentralen Bohrung 20 abgewandten Seite des Anschlags 21 ist ein hohler Federraum 24 ausgebildet. In dem Federraum 24 ist eine Spiralfeder 26 derart angeordnet, das sie einen Ausdrückstift 22 durch eine in dem Anschlag 21 ausgebildete Öffnung in die zentrale Bohrung 20 drückt. Der Ausdrückstift 22 hat beispielsweise eine Länge L2 von 15 bis 17 mm, insbesondere eine Länge L2 von 16,4 mm.

Ein von der zentralen Bohrung 20 und dem Ausdrückstift 22 abgewandtes (hinteres) Ende der Feder 26 ist an einem Federabstützelement 28 abgestützt. Das Federabstützelement 28 ist in die Federbohrung 24 eingeschraubt und setzt die Feder 26 unter eine vorgegebene Vorspannung. Das Federabstützelement 28 weist eine Aufnahme 30 für einen Hakenschlüssel auf, der das Einschrauben des Federabstützelements 28 in das Gehäuse 12 erleichtert.

Beim Aufschieben der Aufschiebevorrichtung 10 auf das Montageelement 2, wie es in der Figur 4 gezeigt ist, wird der Ausdrückstift 22 von dem Montageelement 2 gegen die elastische Kraft der Feder 26 durch die in dem Anschlag 21 ausgebildete Öffnung in den Federraum 24 gedrückt, bis die Endposition erreicht ist, in der das Anschlagelement 2 an dem Anschlag 21 anschlägt.

Beim anschließenden Abziehen der Aufschiebevorrichtung 10 vom einspritzseitigen Bereich 7 des Injektors 6 wird der Ausdrückstift 22 von der Feder 26 gegen das Montageelement 2 gedrückt. Dadurch wird das Montageelement 2 aus der zentralen Bohrung 20 herausgedrückt.

Durch das Herausdrücken des Montageelements 2 aus der zentralen Bohrung 20 wird die Handhabung der Aufschiebevorrichtung 10 vereinfacht, da das Montageelement 2 einfach aus der Aufschiebevorrichtung 10 entnommen werden kann. Darüber hinaus wird auf diese Weise verhindert, dass das Montageelement 2 den in radialer Richtung nach Innen wirkenden Kräften der Spreizelemente 18a, 18b, 18c ausgesetzt ist, die ohne die abstützende Geometrie des einspritzseitigen Bereichs 7 des Injektors 6 zu einer Deformation des Montageelements 2 und damit zu dessen Unbrauchbarkeit führen könnten.

Da die elastischen, in radialer Richtung wirkenden Kräfte der Spreizelemente 18a, 18b, 18c bei Verwendung einer erfindungsgemäßen Aufschiebevorrichtung 10 niemals ohne die stützende Geometrie des einspritzseitigen Bereichs 7 des Injektors 6 auf das Montageelement 2 wirken, kann das Montageelement 2 material- und gewichtssparend mit einer geringen Wandstärke ausgeführt werden.

Durch den vorgegebenen Abstand L1 zwischen dem äußerem Ende 19 der zentralen Bohrung 20 und dem Anschlag 21 wird der Dichtring 4 immer an der exakt richtigen Position auf dem einspritzseitigen Bereich 7 des Injektors 6 positioniert.

## Patentansprüche

1. Montagesystem zum Aufbringen eines Dichtringes (4) auf einen Injektor (6) mit:
einer Aufschiebevorrichtung (10) zum Aufbringen eines Dichtringes (4) auf einen Injektor (6), wobei die Aufschiebevorrichtung (10) ein Gehäuse (12) mit einer Bohrung (20) hat, die zur Aufnahme eines Montageelements (2) ausgebildet ist; wobei die Bohrung (20) ein inneres Ende und ein offenes äußeres Ende (19) hat; und wobei die Bohrung (20) an ihrem inneren Ende einen Anschlag (21) aufweist, der das Eindringen des Montageelements (2) in die Bohrung (20) auf eine vorgegebene Eindringtiefe (L₁) begrenzt, wobei das äußere Ende (19) der Bohrung (20) von elastischen Spreizelementen (18a, 18b, 18c) umgeben ist; und
einem Montageelement (2), das zum Aufschieben auf einen Injektor (6) und zum Einbringen in die in der Aufschiebevorrichtung (10) ausgebildeten Bohrung (20) ausgebildet ist, wobei das Montageelement (2) einen ersten zylindrischen Bereich (2a), der einen ersten Durchmesser (d₁) hat, einen zweiten zylindrischen Bereich (2c), der einen zweiten Durchmesser (d₂) hat, der grö-ßer als der erste Durchmesser (d₁) ist, und einen kegelförmigen Bereich (2b) hat, der zwischen dem ersten und dem zweiten zylindrischen Bereich (2a, 2c) angeordnet ist und der die beiden zylindrischen Bereiche (2a, 2c) miteinander verbindet;
wobei der Dichtring (4) auf seine endgültige Position auf den Injektor (6) schiebbar ist, wenn die Aufschiebevorrichtung (10) bis zum Anschlag (21) auf das Montageelement (2) aufgeschoben ist.

2. Montagesystem nach Anspruch 1, wobei der erste und der zweite zylindrische Bereich (2a, 2c) und der kegelförmige Bereich (2b) koaxial auf einer gemeinsamen Achse (A) angeordnet sind.

3. Montagesystem nach einem der vorherigen Ansprüche, wobei der Anschlag (21) der Aufschiebevorrichtung (10) die Eindringtiefe (L₁) auf 2,5 cm bis 3 cm begrenzt.

4. Montagesystem nach einem der vorherigen Ansprüche, wobei das Gehäuse (12) der Aufschiebevorrichtung (10) wenigstens teilweise aus einem elastischen Material, insbesondere Kunststoff, gefertigt ist.

5. Montagesystem nach einem der vorherigen Ansprüche, wobei am inneren Ende der Bohrung (20) der Aufschiebevorrichtung (10) ein Ausdrückstift (22) vorhanden ist.

6. Montagesystem nach Anspruch 5, wobei der Ausdrückstift (22), insbesondere durch eine Feder (26), elastisch in dem Gehäuse (12) gelagert ist.

7. Verfahren zum Aufbringen eines Dichtringes (4) auf einen Injektor (6) mit einem Montagesystem nach einem der Ansprüche 1 oder 2, wobei das Verfahren umfasst,
einen Dichtring (4) auf den ersten zylindrischen Bereich (2a) des Montageelements (2) aufzubringen;
das Montageelement (2) auf den Injektor (6) aufzubringen;
die Aufschiebevorrichtung (10) derart auf das Montageelement (2) aufzuschieben, dass das Montageelement (2) in die Bohrung (20) eindringt und die Aufschiebevorrichtung (10) den Dichtring (4) über den kegelförmigen Bereich (2b) und den zweiten zylindrischen Bereich (2c) des Montageelements auf den Injektor (6) schiebt, wobei der Dichtring (4) auf seine endgültige Position auf den Injektor (6) geschoben wird, wenn die Aufschiebevorrichtung (10) bis zum Anschlag (21) auf das Montageelement (2) aufgeschoben wird; und
die Aufschiebevorrichtung (10) von dem Montageelement (2) abzuziehen.

## Claims

1. Installation system for applying a sealing ring (4) to an injector (6), having:
a pushing-on device (10) for applying a sealing ring (4) to an injector (6), wherein the pushing-on device (10) has a housing (12) with a bore (20) which is designed to receive an installation element (2); wherein the bore (20) has an inner end and an open outer end (19); and wherein the bore (20) has, at its inner end, a stop (21) which limits the ingress of the installation element (2) into the bore (20) to a specified ingress depth (L₁), wherein the outer end (19) of the bore (20) is surrounded by elastic spreading elements (18a, 18b, 18c); and
an installation element (2) which is designed for pushing onto an injector (6) and for introduction into the bore (20) formed in the pushing-on device (10), wherein the installation element (2) has a first cylindrical region (2a), which has a first diameter (d₁), a second cylindrical region (2c), which has a second diameter (d₂) larger than the first diameter (d₁), and a conical region (2b), which is arranged between the first and the second cylindrical region (2a, 2c) and which connects the two cylindrical regions (2a, 2c) to one another;
wherein the sealing ring (4) can be pushed onto the injector (6) into its final position when the pushing-on device (10) has been pushed onto the installation element (2) as far as the stop (21).

2. Installation system according to Claim 1, wherein the first and the second cylindrical region (2a, 2c) and the conical region (2b) are arranged coaxially on a common axis (A).

3. Installation system according to any of the preceding claims, wherein the stop (21) of the pushing-on device (10) limits the ingress depth (L₁) to 2.5 cm to 3 cm.

4. Installation system according to any of the preceding claims, wherein the housing (12) of the pushing-on device (10) is manufactured at least partially from an elastic material, in particular plastic.

5. Installation system according to any of the preceding claims, wherein a pressing-out pin (22) is provided at the inner end of the bore (20) of the pushing-on device (10).

6. Installation system according to Claim 5, wherein the pressing-out pin (22) is mounted elastically in the housing (12), in particular by means of a spring (26).

7. Method for applying a sealing ring (4) to an injector (6) by means of an installation system according to either of Claims 1 and 2, wherein the method comprises applying a sealing ring (4) to the first cylindrical region (2a) of the installation element (2);
mounting the installation element (2) onto the injector (6) ;
pushing the pushing-on device (10) onto the installation element (2) such that the installation element (2) ingresses into the bore (20) and the pushing-on device (10) pushes the sealing ring (4) over the conical region (2b) and the second cylindrical region (2c) of the installation element onto the injector (6), wherein the sealing ring (4) is pushed onto the injector (6) into its final position when the pushing-on device (10) is pushed onto the installation element (2) as far as the stop (21); and
removing the pushing-on device (10) from the installation element (2).

## Revendications

1. Système de montage permettant d'appliquer une bague d'étanchéité (4) sur un injecteur (6), comprenant :
un dispositif d'emmanchement (10) permettant d'appliquer une bague d'étanchéité (4) sur un injecteur (6), le dispositif d'emmanchement (10) présentant un boîtier (12) muni d'un perçage (20) qui est réalisé pour recevoir un élément de montage (2) ; le perçage (20) présentant une extrémité intérieure et une extrémité extérieure ouverte (19) ; et le perçage (20) présentant à son extrémité intérieure une butée (21) qui limite la pénétration de l'élément de montage (2) dans le perçage (20) à une profondeur de pénétration prédéfinie (L₁), l'extrémité extérieure (19) du perçage (20) étant entourée d'éléments d'écartement élastiques (18a, 18b, 18c) ; et
un élément de montage (2) qui est réalisé pour l'emmanchement sur un injecteur (6) et pour l'introduction dans le perçage (20) réalisé dans le dispositif d'emmanchement (10), l'élément de montage (2) comportant une première zone cylindrique (2a) qui présente un premier diamètre (d₁), une deuxième zone cylindrique (2c) qui présente un deuxième diamètre (d₂) qui est supérieur au premier diamètre (d₁), et une zone conique (2b) qui est disposée entre la première et la deuxième zone cylindrique (2a, 2c) et qui relie les deux zones cylindriques (2a, 2c) l'une à l'autre ;
la bague d'étanchéité (4) pouvant être emmanchée à sa position définitive sur l'injecteur (6) lorsque le dispositif d'emmanchement (10) est emmanché jusqu'en butée (21) sur l'élément de montage (2).

2. Système de montage selon la revendication 1, dans lequel la première et la deuxième zone cylindrique (2a, 2c) et la zone conique (2b) sont disposées de manière coaxiale sur un axe commun (A).

3. Système de montage selon l'une quelconque des revendications précédentes, dans lequel la butée (21) du dispositif d'emmanchement (10) limite la profondeur de pénétration (L₁) à 2,5 cm à 3 cm.

4. Système de montage selon l'une quelconque des revendications précédentes, dans lequel le boîtier (12) du dispositif d'emmanchement (10) est fabriqué au moins en partie en une matière élastique, en particulier en matière synthétique.

5. Système de montage selon l'une quelconque des revendications précédentes, dans lequel une tige d'éjection (22) existe à l'extrémité intérieure du perçage (20) du dispositif d'emmanchement (10).

6. Système de montage selon la revendication 5, dans lequel la tige d'éjection (22) est montée élastique dans le boîtier (12), en particulier par le biais d'un ressort (26).

7. Procédé permettant d'appliquer une bague d'étanchéité (4) sur un injecteur (6) à l'aide d'un système de montage selon l'une quelconque des revendications 1 et 2, le procédé comprenant les étapes consistant à
appliquer une bague d'étanchéité (4) sur la première zone cylindrique (2a) de l'élément de montage (2) ;
appliquer l'élément de montage (2) sur l'injecteur (6) ;
emmancher le dispositif d'emmanchement (10) sur l'élément de montage (2) de telle sorte que l'élément de montage (2) pénètre dans le perçage (20) et le dispositif d'emmanchement (10) emmanche la bague d'étanchéité (4) sur l'injecteur (6) en passant par la zone conique (2b) et la deuxième zone cylindrique (2c) de l'élément de montage, la bague d'étanchéité (4) étant emmanchée à sa position définitive sur l'injecteur (6) lorsque le dispositif d'emmanchement (10) est emmanché jusqu'en butée (21) sur l'élément de montage (2) ; et
retirer le dispositif d'emmanchement (10) de l'élément de montage (2).
